(19) **Europäisches Patentamt**
**European Patent Office**
**Office européen des brevets**

(11) **EP 4 645 812 A1**

(12) **EUROPEAN PATENT APPLICATION**

(43) Date of publication:
**05.11.2025 Bulletin 2025/45**

(21) Application number: **25174028.8**

(22) Date of filing: **02.05.2025**

(51) International Patent Classification (IPC):
*H04L 45/02* (2022.01)  *H04L 45/00* (2022.01)
*H04L 45/42* (2022.01)  *H04L 45/64* (2022.01)
*H04L 47/78* (2022.01)

(52) Cooperative Patent Classification (CPC):
**H04L 45/02; H04L 45/38; H04L 45/42; H04L 45/64;**
H04L 47/781

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.05.2024  FI 20245551**

(71) Applicant: **Nokia Solutions and Networks Oy
02610 Espoo (FI)**

(72) Inventors:
 • **USCUMLIC, Bogdan
  Orsay (FR)**
 • **ENRICI, Andrea
  Bourg la Reine (FR)**

(74) Representative: **Nokia EPO representatives
Nokia Technologies Oy
Karakaari 7
02610 Espoo (FI)**

(54) **TRAFFIC FLOW ROUTING IN COMMUNICATIONS NETWORK**

(57)    Disclosed is a method comprising a network apparatus (CDC) calculating (601) a deterministic virtual topology of a physical IP network, and based on the calculating, communicating (602), to network node(s) (DM) that are located in the physical IP network and are capable of supporting deterministic traffic flow, a routing table including information on the deterministic virtual topology of the physical IP network. The method comprises receiving (603), by a network node (DM) from the network apparatus (CDC), the communication comprising the routing table, detecting (604), by the network node (DM), a deterministic traffic flow received by a first router or switch from a microservice which the network node is connected to via said first router or switch, and routing (605), by the network node (DM), the deterministic traffic flow to a further microservice via a physical routing path indicated by the routing table.

EP 4 645 812 A1

```
CDC                                    DM

601: calculate topology

602: communicate routing table

         603: receive routing table

         604: detect deterministic flow

         605: route deterministic flow
```

FIG. 6

**Description**

FIELD

The following example embodiments relate to communication networks and to routing traffic flows in the network.

BACKGROUND

A scalable microservice software architecture may involve a service mesh. Because of its properties, the service mesh has an increasing role in telecommunications. A service communication proxy, SCP, is a cloud technology based on microservices and the service mesh.

BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.
According to an aspect, there is provided an apparatus comprising at least one processor, and at least one memory storing instructions that, when executed by the at least one processor, cause the apparatus at least to:

calculate a deterministic virtual topology of a physical IP network; and
based on the calculating, communicate, to network nodes that are located in the physical IP network and are capable of supporting deterministic traffic flow, a routing table including information on the deterministic virtual topology of the physical IP network.

According to another aspect, there is provided an apparatus comprising: means for

calculating a deterministic virtual topology of a physical IP network; and
based on the calculating, communicating, to network nodes that are located in the physical IP network and are capable of supporting deterministic traffic flow, a routing table including information on the deterministic virtual topology of the physical IP network.

According to another aspect, there is provided a method comprising:

calculating, by a network apparatus, a deterministic virtual topology of a physical IP network; and
based on the calculating, communicating, by the network apparatus to network nodes that are located in the physical IP network and are capable of supporting deterministic traffic flow, a routing table including information on the deterministic virtual topology of the physical IP network.

According to another aspect, there is provided a computer program comprising instructions which, when executed by an apparatus, cause the apparatus to perform at least the following:

calculate a deterministic virtual topology of a physical IP network; and
based on the calculating, communicate, to network nodes that are located in the physical IP network and are capable of supporting deterministic traffic flow, a routing table including information on the deterministic virtual topology of the physical IP network.

According to another aspect, there is provided a computer readable medium comprising program instructions which, when executed by an apparatus, cause the apparatus to perform at least the following:

calculate a deterministic virtual topology of a physical IP network; and
based on the calculating, communicate, to network nodes that are located in the physical IP network and are capable of supporting deterministic traffic flow, a routing table including information on the deterministic virtual topology of the physical IP network.

According to another aspect, there is provided a non-transitory computer readable medium comprising program instructions which, when executed by an apparatus, cause the apparatus to perform at least the following:

calculate a deterministic virtual topology of a physical IP network; and

based on the calculating, communicate, to network nodes that are located in the physical IP network and are capable of supporting deterministic traffic flow, a routing table including information on the deterministic virtual topology of the physical IP network.

According to another aspect, there is provided a network node comprising at least one processor, and at least one memory storing instructions that, when executed by the at least one processor, cause the network node at least to:

receive, from a network apparatus, a communication comprising a routing table including information on a deterministic virtual topology of a physical IP network, the network node being located in said physical IP network;

detect a deterministic traffic flow received by a first router or switch from a microservice which the network node is connected to via said first router or switch; and

route the deterministic traffic flow to a further microservice via a physical routing path indicated by the routing table.

According to another aspect, there is provided a network node comprising: means for

receiving, from a network apparatus, a communication comprising a routing table including information on a deterministic virtual topology of a physical IP network, the network node being located in said physical IP network;

detecting a deterministic traffic flow received by a first router or switch from a microservice which the network node is connected to via said first router or switch; and

routing the deterministic traffic flow to a further microservice via a physical routing path indicated by the routing table.

According to another aspect, there is provided a method comprising:

receiving, by a network node from a network apparatus, a communication comprising a routing table including information on a deterministic virtual topology of a physical IP network, the network node being located in said physical IP network;

detecting, by the network node, a deterministic traffic flow received by a first router or switch from a microservice which the network node is connected to via said first router or switch; and

routing, by the network node, the deterministic traffic flow to a further microservice via a physical routing path indicated by the routing table.

According to another aspect, there is provided a computer program comprising instructions which, when executed by a network node, cause the network node to perform at least the following:

receive, from a network apparatus, a communication comprising a routing table including information on a deterministic virtual topology of a physical IP network, the network node being located in said physical IP network;

detect a deterministic traffic flow received by a first router or switch from a microservice which the network node is connected to via said first router or switch; and

route the deterministic traffic flow to a further microservice via a physical routing path indicated by the routing table.

According to another aspect, there is provided a computer readable medium comprising program instructions which, when executed by a network node, cause the network node to perform at least the following:

receive, from a network apparatus, a communication comprising a routing table including information on a deterministic virtual topology of a physical IP network, the network node being located in said physical IP network;

detect a deterministic traffic flow received by a first router or switch from a microservice which the network node is connected to via said first router or switch; and

route the deterministic traffic flow to a further microservice via a physical routing path indicated by the routing table.

According to another aspect, there is provided a non-transitory computer readable medium comprising program instructions which, when executed by a network node, cause the network node to perform at least the following:

receive, from a network apparatus, a communication comprising a routing table including information on a deterministic virtual topology of a physical IP network, the network node being located in said physical IP network;

detect a deterministic traffic flow received by a first router or switch from a microservice which the network node is connected to via said first router or switch; and

route the deterministic traffic flow to a further microservice via a physical routing path indicated by the routing table.

LIST OF DRAWINGS

In the following, various example embodiments will be described in greater detail with reference to the accompanying drawings, in which

FIG. 1 illustrates an example of a communication network;
FIGs 2 to 4 illustrate a service mesh and IP network;
FIG. 5 illustrates a service mesh and IP network according to an embodiment;
FIGs 6 to 10 illustrate an exemplary method;
FIG. 11 illustrates an exemplary apparatus.

DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Some example embodiments described herein may be implemented in a wireless communication network comprising a radio access network based on one or more of the following radio access technologies (RATs): Global System for Mobile Communications (GSM) or any other second generation radio access technology, Universal Mobile Telecommunication System (UMTS, 3G) based on basic wideband-code division multiple access (W-CDMA), high-speed packet access (HSPA), Long Term Evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the Evolved Universal Terrestrial Radio Access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

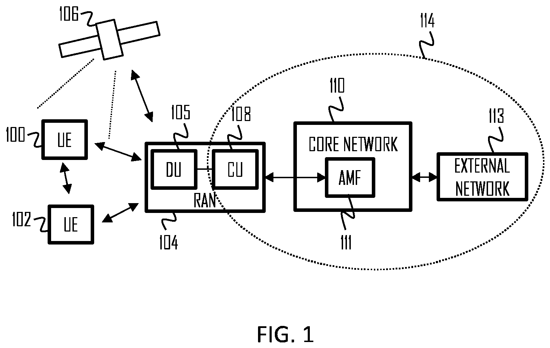

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, or a RAN node. The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and receiving control plane signaling and also for routing data from one access node to another access node.

The access node 104 may further be connected to a core network (CN) 110. The core network 110 may comprise an evolved packet core (EPC) network and/or a 5th generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: an access and mobility management function (AMF) 111, a user plane function (UPF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in cooperation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, in particular mega-constellations (i.e., systems in which hundreds of (nano)satellites are deployed). A given satellite 106 in the mega-constellation may cover several satellite-enabled network entities that create on-ground cells. The on-ground cells may be created through an on-ground relay access node or by an access node located on-ground or in a satellite.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

Some example embodiments are described below using principles and terminology of 5G radio access technology without limiting the example embodiments to 5G radio access technology, however.

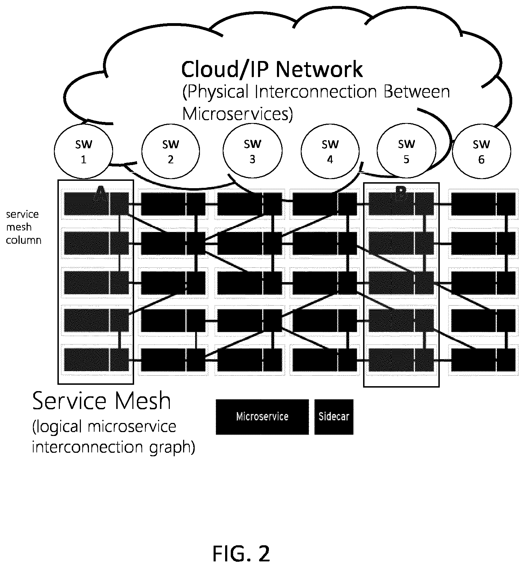

Figure 2 illustrates logical interconnection of microservices, i.e. a "service mesh", and their physical interconnection via a cloud/IP network. Each microservice belongs to a "service mesh column" connected to a switch/router SWk. Different SWk switches may belong to different clouds. When developing the microservices, the software developers need not consider the networking part of microservice interconnection. Instead, this is the role of the "sidecars" (see Fig. 2). The "sidecars" provide the IP address of the destination microservice to which the microservice attached to the sidecar wishes to connect. The logical interconnection graph, connecting different microservices, may be called the service mesh. The service mesh provides logical interconnection mapping of the microservices in a cloud or an IP network (that spans multiple clouds). For instance, in Fig. 2, the microservice "A" uses its sidecar to connect to the microservice "B", via switches SW1 and SW5. The service mesh interconnection graph in Fig. 1b is logical, and it does not necessarily represent physical network connections. The physical network connections are provided within the cloud/IP network, as shown in Fig. 2. The service mesh enables to build a scalable microservice software architecture. Because of its properties, the service mesh has an increasing role in telecommunications for the application of this technology in the 5G cellular technology. The importance of microservices which may also be referred to as network functions (NF), for telecommunication services relates to efforts to find quality of service (QoS) support between NFs deployed in different clouds.

Currently it is not possible to freely deploy microservices in the network (in a cloud of choice) over the service mesh in order the service mesh to automatically support deterministic traffic. A reason for this is that the service mesh was built to ensure resiliency and scalability of the microservice architecture, to ensure that if a microservice fails, the remaining microservices continue to function, and not to support advanced telecommunication scenarios, such as data traffic with deterministic QoS.

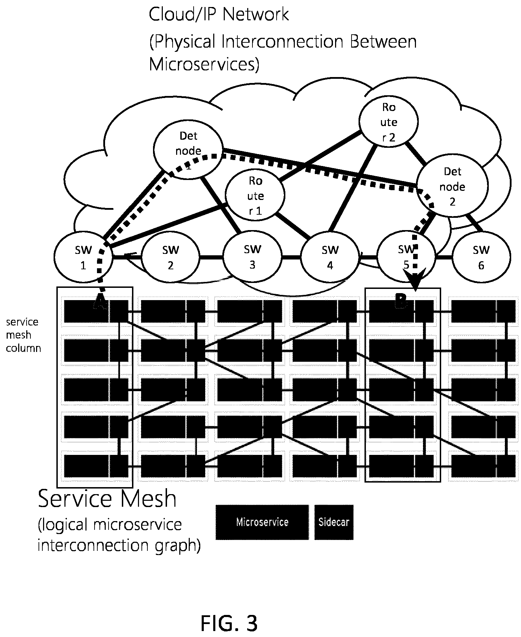

Figure 3 illustrates a situation where a microservice "A" wishes to communicate with microservice "B" with deterministic QoS guarantees. This requires that the intermediate switches support deterministic forwarding. If microservice A wants to establish a communication with microservice B, while benefiting from deterministic QoS guarantees, currently this is not possible, since no deterministic QoS guarantees are included in the service mesh. Indeed, Sidecar@ Microservice A provides the following information to the microservice A: "To go to Microservice B, go to IP_address(B)". This information is not sufficient to establish a deterministic QoS interconnection between microservices A and B. Instead, the traffic is routed over the physical network, and the physical network is not aware of the type of QoS required by the service mesh.

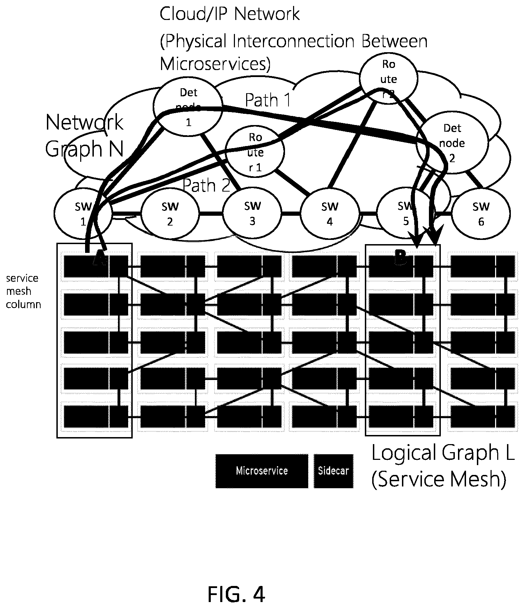

Figure 4 illustrates logical graph L and network graph N, with possible physical paths for communication between microservice A and microservice B. Path 1 is deterministic (via deterministic traffic supporting routers Det node 1 and Det node 2), but Path 2 is not deterministic as router r1 and router r2 do not support deterministic forwarding. As previously discussed, the service mesh is defined by a logical graph L, but in reality the traffic is forwarded over the network graph N. Currently, when Microservice A communicates with Microservice B, the packets from a switch SW1 are forwarded to a switch SW5 over one or multiple non-reserved paths. SW1 and SW5 are the switches connected to microservices A and B, respectively. However, these paths contain switches that may or may not support deterministic communication. Because of this, currently it is not possible to freely deploy microservices in the network (in a cloud of choice), so that the service mesh and the physical network automatically support deterministic traffic. Indeed, not all intermediate switches in the physical network are capable of forwarding deterministic traffic.

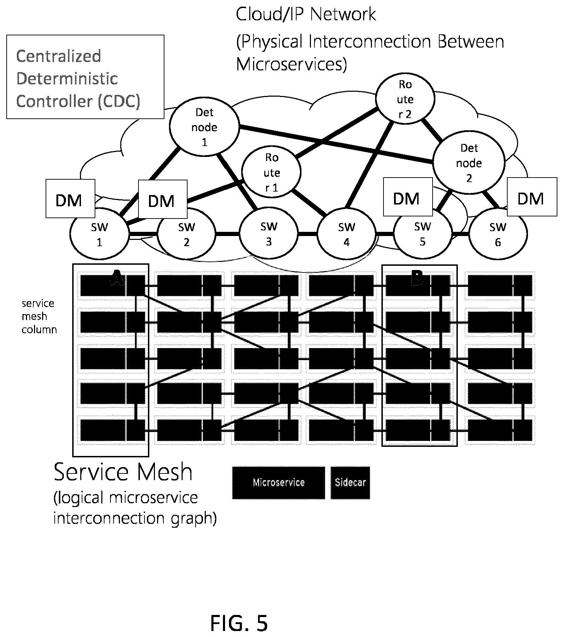

Figure 5 illustrates a deterministic service mesh architecture according to an exemplary embodiment, where deterministic modules (DM) and a centralized deterministic controller (CDC) enable zero-touch resource provisioning for the microservice communications in need for deterministic QoS guarantees. Thus a deterministic service mesh for automatic deterministic interconnection between microservices in the same or different clouds may be provided. "Zero-touch resource provisioning" means that the network resources for deterministic microservice communication are automatically allocated, without the intervention of microservice code developer, or without service mesh signalling. The deterministic module (DM) may be a module installed at each switch SW1, SW2, SW5, SW6 connected to the microservices that want to communicate in a deterministic way. A role of the DM is to detect deterministic traffic flows coming from the microservices. This allows to know which microservice needs deterministic QoS guarantees, without the need for the microservice developer and service mesh to communicate the deterministic QoS needs for their traffic. In another words, if a microservice produces a deterministic (i.e. "isochronous") traffic flow, this may be detected and such flow may be supported. The centralized deterministic controller (CDC) may be implemented as a single entity in the network. A role of the CDC is to calculate a deterministic virtual topology of the physical network and to communicate routing tables including information about the topology to each DM module in the network.

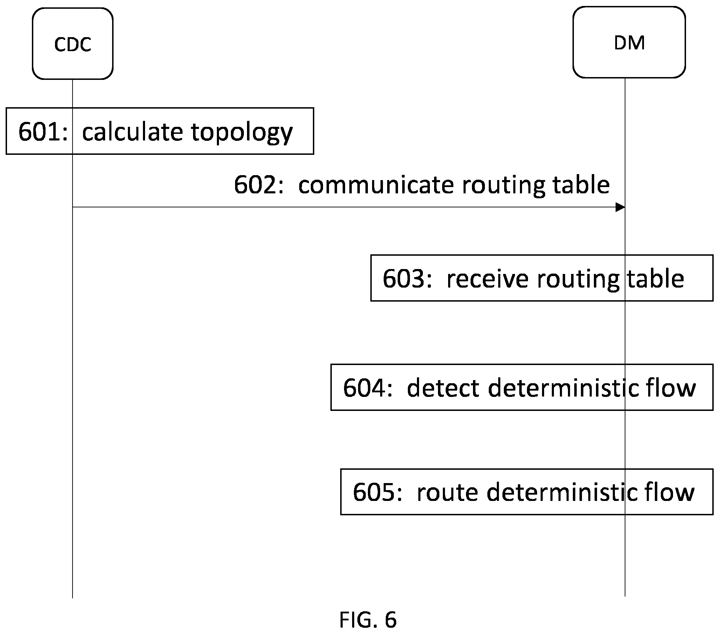

FIG. 6 illustrates a signal flow diagram according to an example embodiment.

Referring to FIG. 6, at 601, a network apparatus, such as an IP network node which may be, for example, a centralized deterministic controller CDC, may calculate a deterministic virtual topology of a physical IP network. At 602, the network apparatus CDC may communicate, to network node(s), such as deterministic module(s) DM which may be, for example, switch(es), router(s), and/or IP router(s), that are located in the physical IP network and are capable of supporting deterministic traffic flow, a routing table including information on the calculated deterministic virtual topology of the physical IP network. At 603, the network node DM may receive, from the network apparatus CDC, the communication comprising the routing table including information on the deterministic virtual topology of the physical IP network. At 604, the network node may detect a deterministic traffic flow received by a first router or switch from a microservice which the network node DM is connected to via said first router or switch. At 605, the network node DM may route the deterministic traffic flow to a further microservice via a physical routing path indicated by the routing table.

In an embodiment, the routing table may indicate pre-reserved physical routing paths in the physical IP network for routing new deterministic traffic flows between microservices, and/or existing physical routing paths in the physical IP network for routing existing deterministic traffic flows between microservices.

In an embodiment, the network apparatus CDC may recalculate the deterministic virtual topology of the physical IP network, and based on the recalculating, communicate, to the network nodes DM that are located in the physical IP network and are capable of supporting deterministic traffic flow, a recalculated routing table including information on recalculated deterministic virtual topology of the physical IP network. In an embodiment, the recalculating may be carried out based on information received from the network nodes DM on deterministic and non-deterministic traffic flows, for routing deterministic traffic flows between microservices. In an embodiment, the recalculating may be carried out using at least one linear program algorithm, for routing new deterministic traffic flows between microservices.

In an embodiment, the network apparatus CDC may minimize total transmission latency for microservice demands routed in the physical IP network, according to a linear program algorithm of formula I:

$$min \left( \sum_{(d,k)\in D} \sum_{r\in R_d} TR_r(C_d y_{(d,k),r} + C_{nd} r_{(d,k),r} + C_\alpha a_{(d,k),r}) \right) \qquad \text{I}$$

In an embodiment, the network apparatus CDC may allocate bandwidth to microservices in the IP network such that a total allocated bandwidth to each microservice demand is equal to a requested data rate, according to a linear program algorithm of formula II, III and/or IV:

$$\sum_{r\in R_d} \sum_{l\in L, l\in \rho_{d,r}} D^{r,l}_{(d,k)} = FD_{(d,k)}, \quad \forall(d,k) \in D \qquad \text{II,}$$

$$\sum_{r\in R_d} \sum_{l\in L, l\in \rho_{d,r}} R^{r,l}_d = FND_d, \ \forall d \in D \qquad \text{III,}$$

$$\sum_{r\in R_d} \sum_{l\in L, l\in \rho_{d,r}} A^{r,l}_{(d,k)} = \alpha_{(d,k)}, \quad \forall(d,k) \in D \qquad \text{IV,}$$

In an embodiment, the network apparatus CDC may define that each data link of a selected physical routing path carry same microservice communication load, according to a linear program algorithm of formula V, VI and/or VII:

$$D^{r,l}_{(d,k)} = D^{r,l'}_{(d,k)}, \qquad \text{V}$$

$$R^{r,l}_{(d,k)} = R^{r,l'}_{(d,k)}, \qquad \text{VI}$$

$$A^{r,l}_{(d,k)} = A^{r,l'}_{(d,k)}, \qquad \text{VII}$$

$$\forall(d,k) \in D, \forall r \in R_d, (\forall l, l' \in L)(l, l' \in r)(l \neq l')$$

In an embodiment, the network apparatus CDC may define that a total bandwidth capacity allocated per data link ≤ a bandwidth capacity of the data link, according to a linear program algorithm of formula VIII:

$$\sum_{(d,k)\in D} \sum_{r\in R_d}(D^{r,l}_{(d,k)} + R^{r,l}_{(d,k)} + A^{r,l}_{(d,k)}) \leq B_l, \quad \forall l \in L \qquad \text{VIII}$$

In an embodiment, the network apparatus CDC may allocate only a single physical routing path r for a microservice demand d, according to a linear program algorithm of formula IX, X, XI, XII, XIII and/or XIV:

$$\sum_{l\in L, l\in \rho_{d,r}} D^{r,l}_{(d,k)} \leq |L| y_{(d,k),r}, \qquad \text{IX}$$

$$\sum_{l\in L, l\in \rho_{d,r}} R^{r,l}_{(d,k)} \leq |L| r_{(d,k),r}, \qquad \text{X}$$

$$\sum_{l\in L, l\in \rho_{d,r}} A^{r,l}_{(d,k)} \leq |L| a_{(d,k),r}, \qquad \text{XI}$$

$$\forall (d,k) \in D, \forall r \in R_d$$

$$\sum_{r\in R_d} y_{(d,k),r} \leq 1, \qquad \text{XII}$$

$$\sum_{r\in R_d} r_{(d,k),r} \leq 1, \qquad \text{XIII}$$

$$\sum_{r\in R_d} a_{(d,k),r} \leq 1, \qquad \text{XIV}$$

$$\forall (d,k) \in D$$

In an embodiment, the network apparatus CDC may define that deterministic and non-deterministic traffic flows use different data links and physical routing paths, according to a linear program algorithm of formula XV, XVI and/or XVII:

$$\sum_{(d,k)\in D} D^{r,l}_{(d,k)} \leq M \cdot UD^{r,l} \qquad \text{XV}$$

$$\sum_{(d,k)\in D} R^{r,l}_{(d,k)} \leq M \cdot UR^{r,l} \qquad \text{XVI,}$$

$$UD^{r,l} + UR^{r,l} \leq 1 \qquad \text{XVII,}$$

$$\forall r \in P_d, \forall l \in L \quad ,$$

In an embodiment, the routing table may indicate pre-reserved physical routing paths in the physical IP network for routing new deterministic traffic flows between microservices, wherein the network node DM may route a new deterministic traffic flow between microservices via a pre-reserved physical routing path in the physical IP network.

In an embodiment, the routing table may indicate existing physical routing paths in the physical IP network for routing deterministic traffic flows between microservices, wherein the network node DM may route a new deterministic traffic flow between microservices via a pre-reserved physical routing path in the physical IP network, and/or route an existing deterministic traffic flow between microservices via an existing routing path in the physical IP network.

In an embodiment, the network node DM may transmit, to the network apparatus CDC, information on existing deterministic traffic flows, new deterministic traffic flows, and non-deterministic traffic flows between microservices, handled by the network node DM.

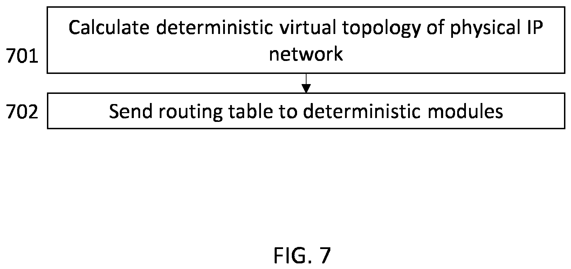

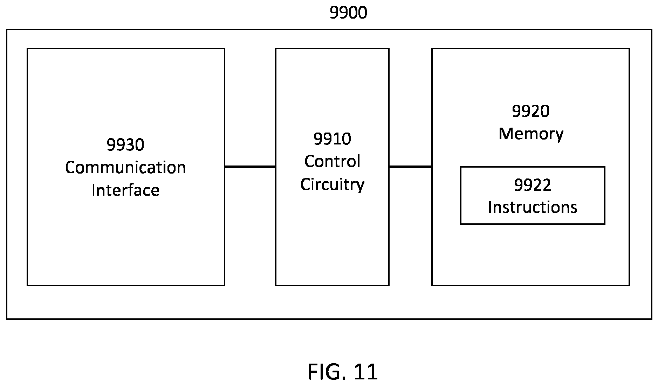

FIG. 7 illustrates a flow chart according to an example embodiment of a method performed by an apparatus 9900 depicted in FIG. 11, of a core network 110, external network 113, or access network 104. For example, the apparatus 9800 may be, or comprise, or be comprised in, a network apparatus or centralized deterministic controller CDC, such as an IP network node.

Referring to FIG. 7, in block 701, the network apparatus CDC may calculate a deterministic virtual topology of a physical IP network. In block 702, the network apparatus CDC may, based on the calculating, communicate, to network nodes DM that are located in the physical IP network and are capable of supporting deterministic traffic flow, a routing table including information on the deterministic virtual topology of the physical IP network.

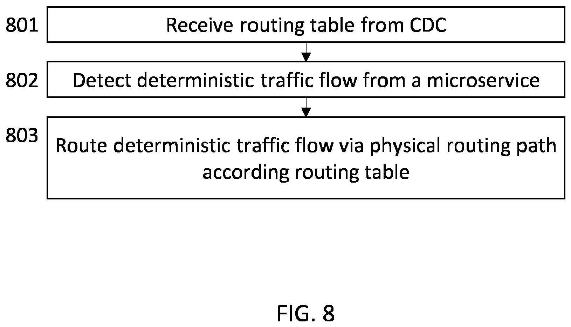

FIG. 8 illustrates a flow chart according to an example embodiment of a method performed by an apparatus 9900 depicted in FIG. 11, of a core network 110, external network 113, or access network 104. For example, the apparatus 9800 may be, or comprise, or be comprised in, a network node or deterministic module DM, such a router, IP router or a switch.

Referring to FIG. 8, in block 801, the network node DM may receive, from a network apparatus CDC, a communication comprising a routing table including information on a deterministic virtual topology of a physical IP network, the network node being located in said physical IP network. In block 802, the network node DM may detect a deterministic traffic flow received by a first router or switch from a microservice which the network node is connected to via said first router or switch. In block 803, the network node DM may route the deterministic traffic flow to a further microservice via a physical routing path indicated by the routing table.

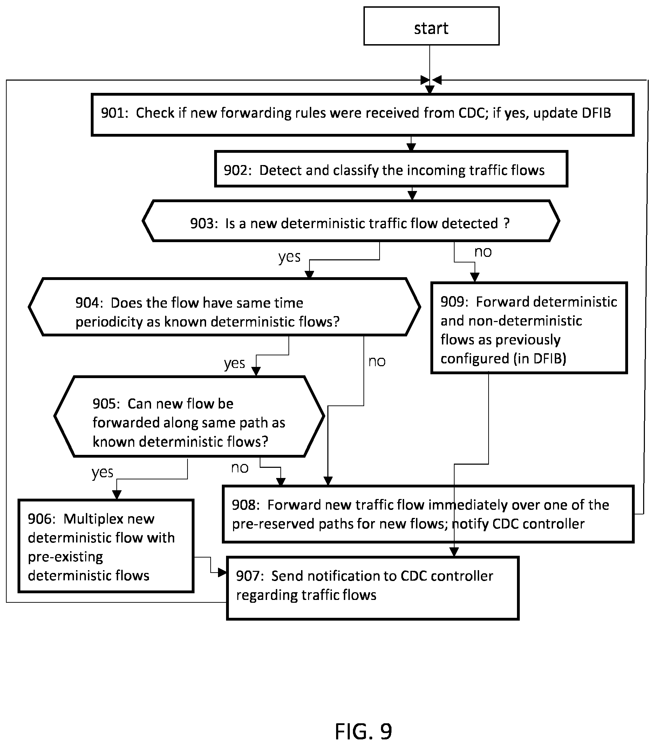

Figure 9 illustrates a flow chart according to an example embodiment of a method performed by an apparatus 9900 depicted in FIG. 11, of a core network 110, external network 113, or access network 104. For example, the apparatus 9800 may be, or comprise, or be comprised in, a network node or deterministic module DM, such a router, IP router or a switch. The deterministic module DM may contain a deterministic forwarding information database DFIB that is used by the deterministic module DM for packet routing. The information in the DFIB database may be regularly updated by the CDC controller, after execution of a "µDETTOPO" algorithm that is described below in more detail. In case a completely new deterministic flow is detected, the DM may forward the new deterministic flow immediately over one of the pre-reserved paths for new flows. This is illustrated in Figure 9.

Referring to Figure 9, at block 901, the DM may check if new forwarding rules have been received from the CDC controller, and if yes, the DM may update the Deterministic Forwarding Information Database (DFIB). At block 902, the DM may detect and classify incoming traffic flows (deterministic and non-deterministic traffic flows). At block 903, the DM may check whether or not a new deterministic traffic flow detected. If at block 903 a new deterministic traffic flow is detected by the DM, the DM may, at block 904, check whether the new deterministic traffic flow has a same time periodicity as some known deterministic flows. The checking 904 may be based on the DFIB database. If at block 904 the new deterministic traffic flow has the same time periodicity as some known deterministic flows, meaning that that the new deterministic flow can be safely time multiplexed with the existing deterministic flows, the DM may, at block 905, check whether the new deterministic flow can be forwarded along the same path as the known deterministic flows, i.e. is there enough capacity in the DFIB for the new flow. If at block 905, the new deterministic flow can be forwarded along the same path as the known deterministic flows, i.e. there is enough capacity in the DFIB for the new flow, the DM may, at block 906, apply multiplexing of the new deterministic flow with the pre-existing deterministic flows and send the new deterministic flow over the path for the pre-existing flows (from DFIB). At block 907, the DM may send a notification to the CDC controller about the situation at this DM; the notification may contain information on the old and new deterministic and non-deterministic flows supported by this DM.

If at block 904 the new deterministic traffic flow does not have the same time periodicity as some known deterministic flows, meaning that that the new deterministic flow cannot be safely time multiplexed with the existing deterministic flows, the DM may, at block 908, forward the new traffic flow immediately over one of the pre-reserved paths for new flows (also present in the DFIB), and notify the CDC controller about the presence of this new flow, for optimizing the deterministic virtual topology, i.e. for updating the DFIB.

If at block 905, the new deterministic flow cannot be forwarded along the same path as the known deterministic flows, i.e. there is not enough capacity in the DFIB for the new flow, the DM may, at block 908, forward the new traffic flow immediately over one of the pre-reserved paths for new flows (also present in the DFIB), and notify the CDC controller about the presence of this new flow, for optimizing the deterministic virtual topology, i.e. for updating the DFIB.

If at block 903, no new deterministic traffic flow is detected by the DM, the DM may, at block 909, forward the deterministic and non-deterministic traffic flows as previously configured in the DFIB. At block 907, the DM may send a notification to the CDC controller about the situation at this DM; the notification may contain information on the deterministic and non-deterministic flows supported by this DM.

After block 907 and/or 908, the process of Figure 9 may restart again from block 901.

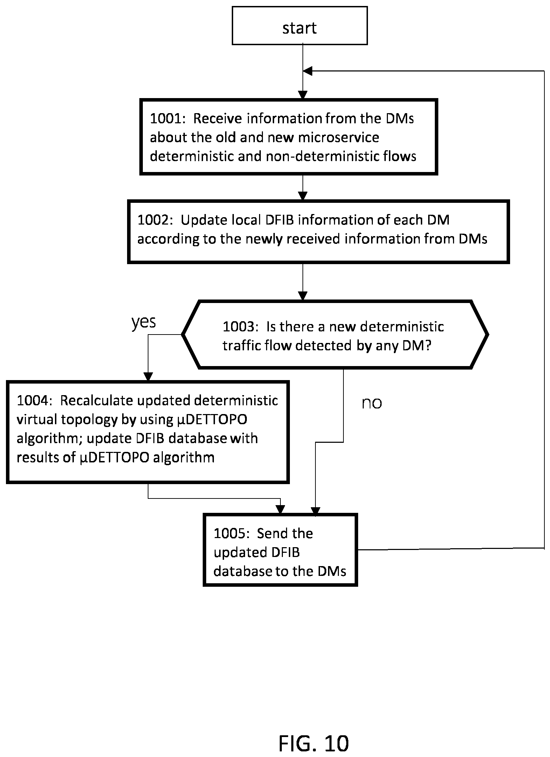

Figure 10 illustrates a flow chart according to an example embodiment of a method performed by an apparatus 9900 depicted in FIG. 11, of a core network 110, external network 113, or access network 104. For example, the apparatus 9800 may be, or comprise, or be comprised in, a network apparatus or centralized deterministic controller CDC, such as an IP network node. The CDC and the DMs may work together on enabling zero-touch network resource provisioning to deterministic microservice communication. "Zero-touch" herein may mean that the deterministic flows from microservices are automatically detected and supported.

Referring to Figure 10, at block 1001, the CDC may receive information from the DMs about old and new microservice deterministic and non-deterministic flows. At block 1002, the CDC may update local DFIB information of each DM according to the newly received information from DMs. At block 1003, the CDC may check whether there is a new deterministic traffic flow detected by any DM. If at block 1003, there is a new deterministic traffic flow detected by one or more DMs, the CDC may at block 1004, recalculate updated deterministic virtual topology by using a $\mu$DETTOPO algorithm, and update the DFIB database with results of the $\mu$DETTOPO algorithm. The CDC may, at block 1005, send the updated DFIB database to the DMs.

If at block 1003, there is no new deterministic traffic flow detected by any of the DMs, the CDC may, at block 1005, send the updated DFIB database to the DMs.

After block 1005, the process of Figure 10 may restart again from block 1001.

In an embodiment, to calculate the deterministic virtual topology, the CDC controller may solve a linear program LP which may be referred to as $\mu$DETTOPO, as defined in Tables I, II and III. $\mu$DETTOPO may allow the CDC controller to update the DFIB database whenever necessary.

Table I. Given parameters for $\mu$DETTOPO

| Parameter | Definition |
|---|---|
| $G(N,L)$ | non-directed graph describing the physical network topology interconnecting switches/routers as nodes in the network. Some of these switches/routers contain Deterministic Modules. Some of the switches/routers are connected to the racks with servers on which microservices can be installed; here $N$ is the set of nodes, $L$ is the set of links |
| $D$ | set of microservice traffic demands $(d,k)$ |
| $FD_{(d,k)}$ | parameter indicating the required data rate [Gbit/s] for transmitting the deterministic microservice demand $(d,k)$. Here, $k$ is the index of **the $k$ -th deterministic microservice demand of the network demand $d$**. The **network demand $d$** is a demand for an interconnection between two nodes in the graph $G(N,L)$. Each network demand $d$ is composed of multiple microservice demands $(d, k)$. The microservice demand $(d, k)$ corresponds to a single microservice interconnection demand within the routing path that will be deployed by the network demand $d$ (as a result of the $\mu$DETTOPO routing). |
| $FND_{(d,k)}$ | parameter indicating the required data rate for transmitting the **non-deterministic microservice demand** $(d,k)$. |
| $\alpha_{(d.k)}$ | parameter indicating the required data rate for the **pre-reserved capacity** of a microservice demand $(d, k)$ |
| $TR_r$ | parameter modelling the transit latency of traffic flow forwarding over the path $r$. |
| $B_l$ | maximum bandwidth available on the link $l$ |
| $R_d$ | set of pre-calculated physical routing structures $\rho_{d,r}$ that can be used to carry the **network demand $d$** |
| $P_d$ | set of all pre-calculated physical routing structures $\rho_{d,r}$ in all sets $R_d$ |
| $\rho_{d,r}$ | set of links used to route a **network demand $d$** |
| $C_d, C_{nd}, C_\alpha$ | real positive constants used in the objective function (Tab. III, equation (1)) that set the weight of the latency sum for deterministic, non-deterministic and pre-reserved microservice capacity, respectively. Typically, the minimization of the latency of deterministic flows is the most important so $C_d > C_{nd}, C_\alpha$, but any positive values for these constants are possible. |

Table II. $\mu$DETTOPO output variables

| Variable | Definition |
|---|---|
| $y_{(d,k),r}$ | binary:=1, iff the **deterministic microservice demand** $(d, k)$ in a service mesh is is routed over the path $r$. |
| $r_{(d,k),r}$ | binary:=1, iff the non-**deterministic microservice demand** $(d,k)$ in a service mesh is is routed over the path $r$. |
| $a_{(d,k),r}$ | binary:=1, iff the **pre-reserved microservice demand** $(d, k)$ in a service mesh is is routed over the path $r$. |

(continued)

| Variable | Definition |
|---|---|
| $D_{(d,k)}^{r,l}$ | real variable indicating the capacity of the **deterministic microservice demand** *(d, k)* that is routed over the path *r* and link *l*. |
| $R_{(d,k)}^{r,l}$ | real variable indicating the capacity of the **non-deterministic microservice demand (d,k)** that is routed over the path *r* and link *l*. |
| $A_{(d,k)}^{r,l}$ | real variable indicating the capacity of the **pre-reserved microservice demand (d,k)** that is routed over the path *r* and link *l*. |
| $UD^{r,l}$ | binary:=1, iff deterministic traffic has been routed over the path *r* and link *l*. |
| $UR^{r,l}$ | binary:=1, iff non-deterministic traffic has been routed over the path *r* and link *l*. |

Table III. Linear program for µDETTOPO

| No. | Constraint |
|---|---|
| (1) | $min(\Sigma_{(d,k)\in D} \Sigma_{r\in Rd} TR_r(C_d y_{(d,k),r} + C_{nd} r_{(d,k),r} + C_\alpha a_{(d,k),r}))$ Minimizing total transit latency for all microservice demands routed in the physical network. |
| (2) | $\Sigma_{r\in R_d} \Sigma_{l\in L, l\in\rho_{d,r}} D_{(d,k)}^{r,l} = FD_{(d,k)}$ , $\forall (d,k) \in D$; <br><br> $\Sigma_{r\in R_d} \Sigma_{l\in L, l\in\rho_{d,r}} R_d^{r,l} = FND_d$, $\forall d \in D$, $\Sigma_{r\in R_d} \Sigma_{l\in L, l\in\rho_{d,r}} A_{(d,k)}^{r,l} = \alpha_{(d,k)}$, $\forall (d,k) \in D$; The total allocated bandwidth to each microservice demand must be equal to the requested value. |
| (3) | $D_{(d,k)}^{r,l} = D_{(d,k)}^{r,l'}$, $R_{(d,k)}^{r,l} = R_{(d,k)}^{r,l'}$, $A_{(d,k)}^{r,l} = A_{(d,k)}^{r,l'}$ , $\forall (d, k) \in D$, $\forall r \in R_d$, $(\forall l, l' \in L)(l,l' \in r)(l \neq l')$ The link continuity constraint ensuring that all the links of the same path carry the same microservice communication load. |
| (4) | $\Sigma_{(d,k)\in D} \Sigma_{r\in R_d}(D_{(d,k)}^{r,l} + R_{(d,k)}^{r,l} + A_{(d,k)}^{r,l}) \leq B_l$ , $\forall l \in L$ The total bandwidth capacity allocated per link cannot exceed the link's capacity. |
| (5) | $\Sigma_{l\in L, l\in\rho_{d,r}} D_{(d,k)}^{r,l} \leq |L| y_{(d,k),r}$, $\Sigma_{l\in L, l\in\rho_{d,r}} R_{(d,k)}^{r,l} \leq |L| r_{(d,k),r}$, $\Sigma_{l\in L, l\in\rho_{d,r}} A_{(d,k)}^{r,l} \leq |L| a_{(d,k),r}$ $\forall (d,k) \in D, \forall r \in R_d$; $\Sigma_{r\in Rd} y_{(d,k),r} \leq 1$, $\Sigma_{r\in Rd} r_{(d,k),r} \leq 1$, $\Sigma_{r\in Rd} a_{(d,k),r} \leq 1$, $\forall (d,k) \in D$ Only a single path *r* can be allocated as a path for each microservice demand *d*. |
| (6) | $\Sigma_{(d,k)\in D} D_{(d,k)}^{r,l} \leq M \cdot UD^{r,l}$, $\Sigma_{(d,k)\in D} R_{(d,k)}^{r,l} \leq M \cdot UR^{r,l}$, $UD^{r,l} + UR^{r,l} \leq 1$, $\forall r \in P_d, \forall l \in L$ Deterministic and non-deterministic traffic cannot share the same links and paths (optional). |

The deterministic service mesh enables to achieve a zero-touch network provisioning for deterministic communication between microservices. The deterministic service mesh enables to take the network configuration burden off from software developers who therefore may fully focus on coding deterministic microservices. The deterministic service mesh integrates the service mesh and the physical network functionalities when enabling deterministic communication, without introducing additional complexity to network control plane or to service mesh implementation. Furthermore, the method and arrangement works regardless of the presence of an orchestrator/a SDN controller in the network and may be, in fact, complementary to the existence of such solutions.

The blocks, related functions, and information exchanges (messages) described above by means of FIGS. 2-10 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 11 illustrates an example of an apparatus 9900 of a core network 110, the apparatus 9900 comprising means for performing one or more of the example embodiments described above. For example, the means may be a centralized deterministic controller CDC, such as an IP network node, or a deterministic module DM, such a router, IP router or a switch, of the core network 110 or the means may be network function virtualization infrastructure.

The apparatus 9900 may comprise, for example, a circuitry or a chipset applicable for realizing one or more of the example embodiments described above. The apparatus 9900 may be an electronic device or computing system comprising one or more electronic circuitries. The apparatus 9900 may comprise a control circuitry 9910 such as at least one processor, and at least one memory 9920 storing instructions 9922 which, when executed by the at least one processor, cause the apparatus 9900 to carry out one or more of the example embodiments described above. Such instructions 9922 may, for example, include computer program code (software). The at least one processor and the at least one memory storing the instructions may provide the means for providing or causing the performance of any of the methods and/or blocks described above.

The processor is coupled to the memory 9920. The processor is configured to read and write data to and from the memory 9920. The memory 9920 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 9920 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 9920 or, alternatively or additionally, they may be received, by the apparatus, via an electromagnetic carrier signal and/or may be copied from a physical entity such as a computer program product. Execution of the computer readable instructions causes the apparatus 9900 to perform one or more of the functionalities described above.

The memory 9920 may be implemented using any suitable data storage technology, such as semiconductor-based memory devices, flash memory, magnetic memory devices and systems, optical memory devices and systems, fixed memory and/or removable memory.

The apparatus 9900 may further comprise or be connected to a communication interface 9930 comprising hardware and/or software for realizing communication connectivity according to one or more communication protocols. The communication interface 9930 may comprise at least one transmitter (Tx) and at least one receiver (Rx) that may be integrated to the apparatus 9900 or that the apparatus 9900 may be connected to. The communication interface 9930 may provide means for performing some of the blocks for one or more example embodiments described above. The communication interface 9930 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 9930 provides the apparatus with communication capabilities to communicate in the wireless communication network. The communication interface 9930 may, for example, provide a radio, cable or fiber interface to one or more network nodes 104 of a radio access network.

It is to be noted that the apparatus 9900 may further comprise various components not illustrated in FIG. 11. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

**Claims**

1. A network apparatus (CDC) comprising at least one processor, and at least one memory storing instructions that, when executed by the at least one processor, cause the apparatus at least to:

   calculate a deterministic virtual topology of a physical IP network; and
   based on the calculating, communicate, to network nodes (DM) that are located in the physical IP network and are capable of supporting deterministic traffic flow, a routing table including information on the deterministic virtual topology of the physical IP network.

2. The apparatus according to claim 1, wherein the routing table indicates

   pre-reserved physical routing paths in the physical IP network for routing new deterministic traffic flows between microservices; and/or
   existing physical routing paths in the physical IP network for routing existing deterministic traffic flows between microservices.

3. The apparatus according to claim 1 or 2, further being caused to:

   recalculate the deterministic virtual topology of the physical IP network; and
   based on the recalculating, communicate, to the network nodes (DM) that are located in the physical IP network and are capable of supporting deterministic traffic flow, a recalculated routing table including information on recalculated deterministic virtual topology of the physical IP network.

4. The apparatus according to claim 3, wherein

   the recalculating is carried out based on information received from the network nodes on deterministic and non-deterministic traffic flows, for routing deterministic traffic flows between microservices; and/or
   the recalculating is carried out using at least one linear program algorithm, for routing new deterministic traffic flows between microservices.

5. The apparatus according to claim 4, being caused to:
   minimize total transmission latency for microservice demands routed in the physical IP network, according to a linear program algorithm of formula I:

$$min \left( \sum_{(d,k) \in D} \sum_{r \in R_d} TR_r (C_d y_{(d,k),r} + C_{nd} r_{(d,k),r} + C_\alpha a_{(d,k),r}) \right) \qquad I$$

**6.** The apparatus according to claim 3 or 4, being caused to:
allocate bandwidth to microservices in the IP network such that a total allocated bandwidth to each microservice demand is equal to a requested data rate, according to a linear program algorithm of formula II, III and/or IV:

$$\sum_{r \in R_d} \sum_{l \in L, l \in \rho_{d,r}} D_{(d,k)}^{r,l} = FD_{(d,k)}, \quad \forall (d,k) \in D \qquad \text{II,}$$

$$\sum_{r \in R_d} \sum_{l \in L, l \in \rho_{d,r}} R_d^{r,l} = FND_d, \quad \forall d \in D \qquad \text{III,}$$

$$\sum_{r \in R_d} \sum_{l \in L, l \in \rho_{d,r}} A_{(d,k)}^{r,l} = \alpha_{(d,k)}, \quad \forall (d,k) \in D \qquad \text{IV,}$$

**7.** The apparatus according to claim 3, 4 or 5, being caused to:
define that each data link of a selected physical routing path carry same microservice communication load, according to a linear program algorithm of formula V, VI and/or VII:

$$D_{(d,k)}^{r,l} = D_{(d,k)}^{r,l'}, \qquad \text{V}$$

$$R_{(d,k)}^{r,l} = R_{(d,k)}^{r,l'}, \qquad \text{VI}$$

$$A_{(d,k)}^{r,l} = A_{(d,k)}^{r,l'}, \qquad \text{VII}$$

$$\forall (d,k) \in D, \forall r \in R_d, (\forall l, l' \in L)(l, l' \in r)(l \neq l')$$

**8.** The apparatus according to any preceding claim 3 to 7, being caused to:
define that a total bandwidth capacity allocated per data link ≤ a bandwidth capacity of the data link, according to a linear program algorithm of formula VIII:

$$\sum_{(d,k) \in D} \sum_{r \in R_d} (D_{(d,k)}^{r,l} + R_{(d,k)}^{r,l} + A_{(d,k)}^{r,l}) \leq B_l, \quad \forall l \in L \qquad \text{VIII}$$

**9.** The apparatus according to any preceding claim 3 to 8, being caused to:
allocate only a single physical routing path r for a microservice demand d, according to a linear program algorithm of formula IX, X, XI, XII, XIII and/or XIV:

$$\sum_{l \in L, l \in \rho_{d,r}} D_{(d,k)}^{r,l} \leq |L| y_{(d,k),r}, \qquad \text{IX}$$

$$\sum_{l \in L, l \in \rho_{d,r}} R_{(d,k)}^{r,l} \leq |L| r_{(d,k),r}, \qquad \text{X}$$

$$\sum_{l \in L, l \in \rho_{d,r}} A_{(d,k)}^{r,l} \leq |L| a_{(d,k),r}, \qquad \text{XI}$$

$$\forall (d,k) \in D, \forall r \in R_d$$

$$\sum_{r \in R_d} y_{(d,k),r} \leq 1, \qquad \text{XII}$$

$$\sum_{r \in R_d} r_{(d,k),r} \leq 1, \qquad \text{XIII}$$

$$\sum_{r \in R_d} a_{(d,k),r} \leq 1, \qquad\qquad \text{XIV}$$

$$\forall(d,k) \in D$$

10. The apparatus according to any preceding claim 3 to 9, being caused to:
define that deterministic and non-deterministic traffic flows use different data links and physical routing paths, according to a linear program algorithm of formula XV, XVI and/or XVII:

$$\sum_{(d,k) \in D} D^{r,l}_{(d,k)} \leq M \cdot UD^{r,l} \qquad\qquad \text{XV}$$

$$\sum_{(d,k) \in D} R^{r,l}_{(d,k)} \leq M \cdot UR^{r,l} \qquad\qquad \text{XVI,}$$

$$UD^{r,l} + UR^{r,l} \leq 1 \qquad\qquad \text{XVII,}$$

$$\forall r \in P_d, \forall l \in L \quad,$$

11. A network node (DM) comprising at least one processor, and at least one memory storing instructions that, when executed by the at least one processor, cause the network node at least to:

receive, from a network apparatus (CDC), a communication comprising a routing table including information on a deterministic virtual topology of a physical IP network, the network node being located in said physical IP network;
detect a deterministic traffic flow received by a first router or switch from a microservice which the network node is connected to via said first router or switch; and
route the deterministic traffic flow to a further microservice via a physical routing path indicated by the routing table.

12. The network node according to claim 11, wherein the routing table indicates

pre-reserved physical routing paths in the physical IP network for routing new deterministic traffic flows between microservices,
the network node being caused to route a new deterministic traffic flow between microservices via a pre-reserved physical routing path in the physical IP network.

13. The network node according to claim 11 or 12, wherein the routing table indicates

existing physical routing paths in the physical IP network for routing deterministic traffic flows between microservices,
the network node being caused to
route a new deterministic traffic flow between microservices via a pre-reserved physical routing path in the physical IP network, and/or
route an existing deterministic traffic flow between microservices via an existing routing path in the physical IP network.

14. The network node according to claim 11, 12 or 13, being caused to:
transmit, to the network apparatus, information on existing deterministic traffic flows, new deterministic traffic flows, and non-deterministic traffic flows between microservices, handled by the network node.

15. A method comprising:

calculating, by a network apparatus (CDC), a deterministic virtual topology of a physical IP network; and
based on the calculating, communicating, by the network apparatus to network nodes (DM) that are located in the physical IP network and are capable of supporting deterministic traffic flow, a routing table including information on the deterministic virtual topology of the physical IP network.

16. A method comprising:

   receiving, by a network node (DM) from a network apparatus (CDC), a communication comprising a routing table including information on a deterministic virtual topology of a physical IP network, the network node being located in said physical IP network;
   detecting, by the network node (DM), a deterministic traffic flow received by a first router or switch from a microservice which the network node is connected to via said first router or switch; and
   routing, by the network node (DM), the deterministic traffic flow to a further microservice via a physical routing path indicated by the routing table.

17. A non-transitory computer readable medium comprising program instructions which, when executed by a network apparatus (CDC), cause the network apparatus to perform at least the following:

   calculate a deterministic virtual topology of a physical IP network; and
   based on the calculating, communicate, to network nodes (DM) that are located in the physical IP network and are capable of supporting deterministic traffic flow, a routing table including information on the deterministic virtual topology of the physical IP network.

18. A non-transitory computer readable medium comprising program instructions which, when executed by a network node (DM), cause the network node to perform at least the following:

   receive, from a network apparatus (CDC), a communication comprising a routing table including information on a deterministic virtual topology of a physical IP network, the network node being located in said physical IP network;
   detect a deterministic traffic flow received by a first router or switch from a microservice which the network node is connected to via said first router or switch; and
   route the deterministic traffic flow to a further microservice via a physical routing path indicated by the routing table.

FIG. 1

Cloud/IP Network
(Physical Interconnection Between Microservices)

SW 1 SW 2 SW 3 SW 4 SW 5 SW 6

service mesh column

Service Mesh
(logical microservice interconnection graph)

Microservice    Sidecar

FIG. 2

Cloud/IP Network
(Physical Interconnection Between
Microservices)

service
mesh
column

Service Mesh
(logical microservice
interconnection graph)

Microservice    Sidecar

FIG. 3

Cloud/IP Network
(Physical Interconnection Between
Microservices)

Network
Graph N

Path 1

Det
node
1

Ro
ute
r2

Ro
ute
r 1

Det
node
2

Path 2

SW
1

SW
2

SW
3

SW
4

SW
5

SW
6

A

B

service
mesh
column

| Microservice | Sidecar |

Logical Graph L
(Service Mesh)

FIG. 4

Centralized
Deterministic
Controller (CDC)

Cloud/IP Network
(Physical Interconnection Between
Microservices)

Ro
ute
r 2

Det
node
1

Det
node
2

Ro
ute
r 1

DM  DM  DM  DM

SW 1  SW 2  SW 3  SW 4  SW 5  SW 6

A  B

service
mesh
column

Microservice  Sidecar

Service Mesh
(logical microservice
interconnection graph)

FIG. 5

DM

CDC

601: calculate topology

602: communicate routing table

603: receive routing table

604: detect deterministic flow

605: route deterministic flow

FIG. 6

| 701 | Calculate deterministic virtual topology of physical IP network |
|---|---|

| 702 | Send routing table to deterministic modules |
|---|---|

FIG. 7

801 | Receive routing table from CDC

802 | Detect deterministic traffic flow from a microservice

803 | Route deterministic traffic flow via physical routing path according routing table

FIG. 8

start

901: Check if new forwarding rules were received from CDC; if yes, update DFIB

902: Detect and classify the incoming traffic flows

903: Is a new deterministic traffic flow detected ?

yes

no

904: Does the flow have same time periodicity as known deterministic flows?

909: Forward deterministic and non-deterministic flows as previously configured (in DFIB)

yes

no

905: Can new flow be forwarded along same path as known deterministic flows?

yes

no

906: Multiplex new deterministic flow with pre-existing deterministic flows

908: Forward new traffic flow immediately over one of the pre-reserved paths for new flows; notify CDC controller

907: Send notification to CDC controller regarding traffic flows

FIG. 9

start

1001: Receive information from the DMs about the old and new microservice deterministic and non-deterministic flows

1002: Update local DFIB information of each DM according to the newly received information from DMs

1003: Is there a new deterministic traffic flow detected by any DM?

yes

no

1004: Recalculate updated deterministic virtual topology by using μDETTOPO algorithm; update DFIB database with results of μDETTOPO algorithm

1005: Send the updated DFIB database to the DMs

FIG. 10

9900

9930
Communication
Interface

9910
Control
Circuitry

9920
Memory

9922
Instructions

FIG. 11

Europäisches
Patentamt

European
Patent Office

Office européen
des brevets

# EUROPEAN SEARCH REPORT

**Application Number**

EP 25 17 4028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | CN 116 112 371 A (ZTE CORP)<br>12 May 2023 (2023-05-12)<br>* paragraph [0015] *<br>* paragraph [0040] *<br>* paragraph [0080] *<br>* paragraph [0086] *<br>* paragraph [0087] *<br>----- | 1,2,<br>11-18<br>3-10 | INV.<br>H04L45/02<br>H04L45/00<br>H04L45/42<br>H04L45/64<br><br>ADD.<br>H04L47/78 |
| X<br>A | CN 100 555 977 C (SHANGHAI REDNEURONS CO LTD [CN]) 28 October 2009 (2009-10-28)<br>* claims 1-7 *<br>----- | 1,11,<br>15-18<br>2-10,<br>12-14 | |

**TECHNICAL FIELDS SEARCHED (IPC)**

H04L

The present search report has been drawn up for all claims

| Place of search | Date of completion of the search | Examiner |
|---|---|---|
| The Hague | 5 September 2025 | Ciurel, Cristian |

EPO FORM 1503 03.82 (P04C01)

## ANNEX TO THE EUROPEAN SEARCH REPORT
## ON EUROPEAN PATENT APPLICATION NO.

EP 25 17 4028

This annex lists the patent family members relating to the patent documents cited in  the above-mentioned European search report.
The members are as contained in the European Patent Office EDP file on
The European Patent Office is in no way liable for these particulars which are merely given for the purpose of information.

05-09-2025

| Patent document cited in search report | | Publication date | Patent family member(s) | | Publication date |
|---|---|---|---|---|---|
| CN 116112371 | A | 12-05-2023 | CN | 116112371 A | 12-05-2023 |
| | | | EP | 4432622 A1 | 18-09-2024 |
| | | | WO | 2023082815 A1 | 19-05-2023 |
| CN 100555977 | C | 28-10-2009 | NONE | | |

For more details about this annex : see Official Journal of the European Patent Office, No. 12/82